# EUROPÄISCHE PATENTSCHRIFT

(11) **EP 2 535 875 B1**
(45) Veröffentlichungstag und Bekanntmachung des Hinweises auf die Patenterteilung: **07.05.2014**
(21) Anmeldenummer: 11450010.1
(22) Anmeldetag: 21.01.2011
(51) Int. Cl.: G07C 15/00, G06K 9/00

(54) **Verfahren und Vorrichtung zur Identifikation von Spielkugeln**
Method and device for identifying game balls
Procédé et dispositif destinés à l'identification de boules de jeu

(43) Veröffentlichungstag der Anmeldung: 19.12.2012
(73) Patentinhaber: Novomatic AG, 2352 Gumpoldskirchen (AT)
(72) Erfinder: Rommer, Christian, 2352 Gumpoldskirchen (DE)
(74) Vertreter: Wildhack & Jellinek

(56) Entgegenhaltungen:
- EP-A2- 0 828 234
- DE-U1- 20 005 276
- ES-A1- 2 163 377
- FR-A1- 2 577 429
- US-A1- 2006 105 833
- US-B1- 7 775 521
- Anonymus: "Bingo Balls Recognition", Neural Labs , 6. Dezember 2007 (2007-12-06), XP002644531, Gefunden im Internet: URL:http://web.archive.org/web/20071206135 612/http://www.neurallabs.net/en/Rec.-Bola s-bingo-4.html [gefunden am 2011-06-23]
- Anonymus: "BBAR v.2.0.00 Bingo balls Automatic Reader DLL Function Reference", Neural Labs , Mai 2007 (2007-05), Seiten 1-13, XP002644532, Gefunden im Internet: URL:http://www.neurallabs.net/en/articulos -y-publicaciones/Documentos-BBAR/Interfici e-de-BBar/download.html [gefunden am 2011-06-23]
- Anonymus: "BBAR v.1.2.00 Bingo Balls Automatic Reader Technical Manual", Neural Labs , Februar 2007 (2007-02), Seiten 1-4, XP002645322, Gefunden im Internet: URL:http://www.neurallabs.net/en/articulos -y-publicaciones/Documentos-BBAR/Requermie ntos-y-Consejos-de-instalacion-English-/do wnload.html [gefunden am 2011-06-23]
- CHERIET M ET AL: "Character Recognition Systems. A Guide for Students and Practitioners", 1. Januar 2007 (2007-01-01), WILEY, Hoboken, New Jersey, XP002590450, ISBN: 978-0-471-41570-1 * Seite 32 - Seite 37 *
- TONGTONG HUANG ET AL: "Number ball recognition at arbitrary pose using multiple view instances", IEEE YOUTH CONFERENCE ON INFORMATION, COMPUTING AND TELECOMMUNICATION, 2009. YC-ICT '09., 20. September 2009 (2009-09-20), Seiten 510-513, XP031611879, IEEE, PISCATAWAY, NJ, USA DOI: 10.1109/YCICT.2009.5382444 ISBN: 978-1-4244-5074-9

## Beschreibung

Die Erfindung betrifft ein Verfahren gemäß dem Oberbegriff des Patentanspruchs 1. Ferner betrifft die Erfindung eine Vorrichtung gemäß dem Oberbegriff des Patentanspruchs 12.

### Gebiet der Erfindung

Erfindungsgemäße Verfahren und Vorrichtungen werden vorzugsweise im Bereich der automatisierten Durchführung von Glücksspielen verwendet. Insbesondere können derartige Verfahren und Vorrichtungen zur Durchführung eines automatisierten Bingo-Spiels verwendet werden.

### Hintergrund der Erfindung

Hintergrund der Erfindung ist die automatisierte Detektion von Spielkugeln nach deren Auswahl bzw. Ziehung aus einer vorgegebenen Anzahl von Spielkugeln. Typische Spiele mit zu ziehenden Spielkugeln wie z.B. Lotto, Bingo usw. benötigen zu ihrer Durchführung einen Spielautomaten, durch den eine objektive Erstellung von Zufallszahlen gewährleistet ist. Für den Spieler soll die Zufälligkeit des Spielergebnisses offensichtlich sein, insbesondere soll dem Spieler das Gefühl vermittelt werden, dass die Ziehung ohne Manipulationen zu seinen Lasten durchgeführt wird. Aus diesem Grund werden im Stand der Technik Spielautomaten verwendet, die neben der automatisierten Ziehung von Spielkugeln auch noch eine automatisierte Identifikation der Spielkugeln vornehmen.

Aus dem Stand der Technik ist eine Vielzahl unterschiedlicher Vorgehensweisen bekannt, bel der die Splelkugein mit Transponder-Chips versehen sind und die Identifikation über RFID erfolgt. Andere Systeme verwenden Barcodes zur Identifikation der Spielkugeln. Wiederum andere Systeme benutzen Kameras und spezielle Algorithmen, um die auf den Spielkugeln aufgedruckten oder aufgeprägten Symbole zu identifizieren.

Insbesondere ist aus US 7775521 B1 eine Ballziehungsmaschine bzw. Kugelziehungsmaschine dargestellt, die einen motorgetriebenen Schlitten aufweist, der die luftverwirbeiten Kugeln aus einer Mischkammer aufnimmt, weiterleitet und mittels eines Barcode-Readers scannt. Eine TV-Kamera wird zur Darstellung der Kugeln eingesetzt.

Weiters sind aus dem Stand der Technik zwei Veröffentlichungen XP-002645322 und XP-002644532 bekannt, die unterschiedliche Programmbibliotheken zur Analyse von Bildern zeigen, die von gezogenen Spielbällen bzw. Spielkugeln aufgenommen wurden.

Schließlich zeigt DE 20005276 U eine Auswertevorrichtung für eine Kugelausgabevorrichtung umfassend einen kugelförmigen Gegenstand mit wenigstens einem darin aufgenommenen erfassbaren Element und wenigstens ein Erfassungselement, das mit wenigstens einer Bahn verbunden ist und mit einem Wert des wenigstens einen erfassbaren Elements erfasst, wobei es mit einer Zentraleinheit verbunden ist, die den Wert unterscheidet und darstellt.

Problematisch Ist bei all diesen Verfahren, dass die Positionierung der Kugeln für die Aufnahme durch die Kamera sehr präzise erfolgen muss, um eine eindeutige Identifikation der auf den Kugeln abgebildeten Symbole zu erzielen.

Die Erfindung stellt sich somit die Aufgabe, die Identifikation bzw. ein Identifizieren der Kugeln zu verbessern und ein Verfahren sowie eine Vorrichtung zur Verfügung zu stellen, mit denen die Detektion der Kugeln verbessert und weniger fehleranfällig wird.

Die Erfindung löst die Aufgabe bei einem Verfahren der eingangs genannten Art mit den Merkmalen des Kennzeichens des Patentanspruchs 1,

Die Erfindung löst diese Aufgabe bei einer Vorrichtung der eingangs genannten Art mit den Merkmalen des Kennzeichens des Patentanspruchs 12.

### Zusammenfassung der Erfindung

Erfindungsgemäß ist ein Verfahren zur Identifikation einer ausgewählten Spielkugel aus einer vorgegebenen Anzahl von Spielkugeln vorgesehen, wobei jede der Spielkugeln jeweils mit einem Symbol versehen ist, das von den Symbolen der übrigen Spielkugeln abweicht,
a) wobei die ausgewählte Spielkugel aus einer Ausgangslage durch den Aufnahmebereich einer Bildaufnahmeeinheit bewegt wird,
b) wobei der Massenmittelpunkt des Abblids der ausgewählten Spielkugel im Bild der Bildaufnahmevorrichtung für einen vorgegebenen Zeitraum unverändert gehalten wird und keine Relativbewegung in Bezug auf das Bild vollführt,
c) wobei die Bildposition und Größe des Abbilds der Spielkugel ermittelt wird, und überprüft wird, ob Teile des Abbilds der Spielkugel außerhalb eines vorab in Bezug auf das Bild vorgegebenen seitlichen Rands liegen, und
d) falls Teile des Abbilds der Spielkugel außerhalb dieses seitlichen Rands liegen, die Spielkugel anhand der errechneten Position entlang oder entgegen der Fortbewegungsrichtung des Wegs der Spielkugel verstellt wird und in den Aufnahmebereich der Bildaufnahmeeinheit zurückgebracht und/oder neu positioniert wird und die Schritte b) bis d) wlederholt werden, und
e) auf Basis zumindest eines mit der Bildaufnahmeeinheit aufgenommenen Bilds ein Identifikationsverfahren durchgeführt wird und ein Identifikationsresultat ermittelt wird, das dem Symbol auf der Oberfäche der ausgewählten Spielkugel entspricht oder eindeutig zugeordnet ist.

Hierbei besteht der Vorteil, dass die Erkennung bzw. Identifkation der ausgewählten Spielkugel wesentlich zuverlässlger durchgeführt werden kann und auf Grund einer Fehlpositionierung der ausgewählten Spielkugel bewirkte Falschdetektionen vermieden werden können. Durch die erfindungsgemäße Wiederholung kann die Spielkugel neu positioniert und ausgewertet werden.

Weiters kann vorgesehen sein, dass zur Festsetzung des Massenmittelpunkts der Abbildung der ausgewählten Spielkugel im Bild der Bildaufnahmeeinhelt die Spielkugel angehalten wird und relativ zur Bildaufnahmeeinheit unbewegt verbleibt.

Ein solches Vorgehen ermöglicht einen mechanisch einfachen Aufbau des Spielautomaten und verringert die Fahleranfälligkeit zusätzlich.

Ein weiterer besonderer Aspekt der Erfindung sieht vor, dass die Spielkugel mittels einer Kugelführungseinheit aus der Ausgangslage entlang eines vorgegebenen Wegs durch den Aufnahmebereich der Bildaufnahmeeinheit bewegt wird, wobei die jeweilige ausgewählte Spielkugel nach ihrer Bewegung über den vorgegebenen Weg aus der Kugelführungseinheit entfernt und gegebenenfalls weitergeleitet wird.

Dies ermöglicht eine einfache Konstruktion der Bildaufnahmeeinrichtung und erlaubt den horizontalen Einbau einer Bildaufnahmeeinrichtung, wodurch auf ein für vertikal angeordnete Bildaufnahmeeinrichtungen abgestimmtes komplizlerteres Lüftungssystem verzichtet werden kann.

Alternativ oder zusätzlich kann vorgesehen sein, dass die ausgewählte Spielkugel auf dem vorgegebenen Weg kreisbogenförmig auf einer horizontalen Ebene fortbewegt wird, wobei die Aufnahmerichtung oder der Sehstrahl der Bildaufnahmeeinheit im wesentlichen horizontal verläuft und vorzugsweise auf einen Punkt auf dem vorgegebenen Weg gerichtet ist, in dem die Spielkugel der Bildaufnahmeeinheit am nächsten ist.

Dies bewirkt eine besonders einfache Aufnahme durch die Bildaufnahmeeinrichtung und verringert die Fehleranfälligkeit des Verfahrens.

Weiters kann vorgesehen sein, dass die Spielkugel von einer kreisförmigen Ausnehmung der Im wesentlichen flach und scheibenförmig ausgebildeten Kugelführungseinheit aufgenommen und gegen ein seitliches Wegrollen gesichert wird.

Dabei kann vorgesehen sein, dass die Spielkugel von oben in bzw. auf die kreisförmige Ausnehmung geworfen wird oder fällt und wobei vorzugsweise der Fall der Spielkugel, insbesondere durch eine unterhalb der Ausnehmung befindlichen elastische Dämpfungseinheit, gebremst wird.

Dies verhindert eine Zerstörung der Spielkugeln und verlängert die Lebenszeit des Splelautomaten wie der Spielkugeln.

Ein besonderer Aspekt der Erfindung sieht vor, dass die Spielkugel in der Ausnehmung der Kugelführungseinheit geführt und/oder rotiert wird und auf einer unterhalb der scheibenförmigen Kugelführungseinheit befindlichen Grundplatte abgestützt wird. Dies ermöglicht einen mechanisch einfachen Aufbau und bewirkt, dass die Spielkugel während ihres Laufs entlang des vorgegebenen Wegs rotiert und somit die Wahrscheinlichkeit zur fehlerfreien Detektion der Symbole steigt, da die Spielkugel aus unterschiedlichen Richtungen sichtbar ist.

Bevorzugterweise kann vorgesehen sein, dass die Spielkugel am Ende des Wegs durch eine in der Grundplatte befindliche Ausnehmung fällt und weiter transportiert wird. Dies ermöglicht einen einfachen Abtransport der Sptelkugel nach erfolgter Identifikation.

Weiters kann vorgesehen sein, dass die Bildaufnahmeeinheit laufend In vorgegebenen zeitlichen Abständen Bilder erstellt. Dies ermöglicht eine Vielzahl unterschiedlicher voneinander unabhängiger Identifikationsvorgänge und erhöht die Detektionsgenauigkeit bzw. sicherineit.

Insbesondere kann vorgesehen sein, dass diese Bilder vorzugsweise auf einem Monitor für die Spieler sichtbar dargestellt werden Hierdurch wird dem Spieler eine bessere Übersicht über das Spiel gewährt und dem Spieler der Eindruck eines manipulationsfreien und fairen Spiels suggeriert.

Eine Weiterbildung der Erfindung sieht vor, dass während des vorgegebenen Zeitraums eine Anzahl von, Insbesondere vier, Bildern erstellt wird und die Identifikation der Spielkugel basierend auf zumindest zwei zu unterschiedlichen Zeitpunkten aufgenommenen Bildern erfolgt, wobei die Identifikation für jedes der Bilder separat vorgenommen wird und wobei jede Identifikation eines Bilds ein separates Identifikationsresultat liefert,
wobei eine Identifikation nur dann als korrekt erfolgt gilt, wenn eine vorgegebene Anzahl, insbesondere von zumindest der Hälfte, vorzugswelse sämtlicher, der identifikationsresultate identisch ist. Hierdurch kann die Zuverlässigkeit der Identifikation weiter gesteigert werden.

Zur Verbesserung der Identifikationsgenauigkeit kann vorgesehen werden, dass anhand eines aufgenommenen Bildes ein Identifikationsresultat ermittelt wird, wobei auf den Spielkugeln jeweils in Kreisen angeordnete Symbole angeordnet sind, und wobei eine die Schriftrichtung darstellende Markierungslinie vorgesehen ist, die insbesondere in Schriftrichtung unterhalb angeordnet ist und gleichsam eine Unterstreichung des jeweiligen Symbols darstellt, wobei die Markierungslinie insbesondere mit dem Kreis insbesondere über eine Hilfsilinie verbunden ist,
indem
a) Bereiche des Abbilds der Spielkugel gesucht und als Erkennungsbereiche abgespeichert werden, die durch eine, insbesondere durchgezogene, Kreislinie begrenzt sind,
b) für sämtliche aufgefundenen kreisförmig umrandeten Bereiche die Ausrichtung des innerhalb des Bereichs befindlichen Symbols festgestellt wird, insbesondere indem das Abbild einer an die Kreislinie angrenzende oder mit dieser verbundenen Markierungslinie gesucht und deren Ausrichtung festgestellt wird,
   dass die aufgefundenen Bildbereiche entsprechend ihrer Ausrichtung rotiert werden, sodass die ermittelten Symbole jeweils gleich ausgerichtet sind,
c) gegebenenfalls die Bildbereiche auf eine vorgegebene Größe skallert werden, und
d) die in den ausgerichteten und/oder rotierten Bereichen befindlichen Schriftsymbole, Insbesondere zuerst gefiltert und anschließend, einem Symbolerkennungsverfahren unterzogen werden und für jeden der ausgerichteten Bereiche ein das jewelllge Symbol darstellende Identifikationsresultat ermittelt wird, wobei gegebenenfalls bei unterschiedlichen Identifikationsresultaten für mehrere Bereiche dasjenige identifikationsresultat als ermittelt gilt, das für die meisten Bereichen erkannt worden Ist

Die Erfindung betrifft weiters eine Vorrichtung zur Identifikation einer ausgewählten Spielkugel aus einer vorgegebenen Anzahl von Spielkugeln, wobei jede der Spielkugeln jeweils mit einem Symbol versehen ist, das von den Symbolen der übrigen Spielkugeln abweicht,
a) mit einer Bildaufnahmeeinheit, die einen Aufnahmebereich aufweist,
b) mit Mitteln zur Bewegung der ausgewählten Spielkugel aus einer Ausgangslage durch den Aufnahmebereich der Bildaufnahmeeinheit,
c) mit einer Prüfungseinheit zur Prüfung der Position und Größe des Abbilds der Spielkugel. sowie zur Abgabe eines Positionierungs-Signals für den Fall, dass Teile des Abbilds der Spielkugel außerhalb eines vorab in Bezug auf das Bild vorgegebenen seitlichen Rands liegen,
d) einer der Prüfungseinheit nachgeschalteten Positionierungseinheit, die bei Vorliegen eines Positionlerungs-Signals an Ihrem Eingang die Mittel zur Bewegung der ausgewählten Spielkugel zu einer neuen Position und zum Neupositionieren der Spielkugel veranlasst, wobei die Vorrichtung dazu ausgebildet ist, die Spielkugel anhand der errechneten Position entlang oder entgegen der Fortbewegungsrichtung des Wegs der Spielkugel zu verstellen, sowie
e) einer Identifikationseinheit zur Identifikation von auf den Spielkugeln befindlichen Symbolen auf Basis zumindest eines mit der Bildaufnahmeeinheit aufgenommenen Bilds, an deren Ausgang ein Identifikationsresultat vorliegt, das einem Symbol auf der Oberfläche der ausgewählten Spielkugel entspricht oder eindeutig zuordenbar ist.

Bei einer solchen Vorrichtung ist die Erkennung bzw. identitication der ausgewählten Spielkugel wesentlich zuverlässiger. Falschdetektionen, die auf Grund einer Fehlpositionierung der ausgewählten Spielkugel bewirkt sind, können wirksam und zuverlässig vermieden werden. Durch die erfindungsgemäße Wiederholung kann die Spielkugel neu positioniert und ausgewertet werden.

Weiters kann eine Steuereinheit vorgesehen sein, die zur Festsetzung des Massenmittelpunkts der Abbildung der ausgewählten Spielkugel im Bild der Bildaufnahmeeinheit die Mittel zur Bewegung der Spielkugel anhält oder inaktiv stellt, sodass die Spielkugel relativ zur Bildaufnahmeenheit unbewegt verbleibt.

Dies erlaubt einen besonders einfachen und mechanisch stabilen Aufbau bei gleichzeitig geringer Fehleranfälligkeit.

Zum einfachen Abtransport der Spielkugel nach erfolgter Identifikation kann vorgesehen sein, dass eine Kugelführungseinheit vorgesehen ist, mit der die Spielkugel aus der Ausgangslage entlang eines vorgegebenen Wegs durch den Aufnahmebereich der Bildaufnahmeeinheit bewegbar Ist, wobei die jeweilige ausgewählte Spielkugel nach ihrer Bewegung über den vorgegebenen Weg aus der Kugelführungseinheit fällt.

Eine mechanisch besonders vorteilhafte Weiterbildung der Erfindung sieht vor, dass die Kugelführungseinheit als flache, insbesondere durchsichtige, dünne Platte. insbesondere als Kreisscheibe, ausgebildet ist, die zur Aufnahme der Spielkugel zumindest eine exzentrisch angeordnete, insbesondere kreisförmige. Ausnehmung aufweist, wobei die Platta der Kugelführungsefnheit horizontal angeordnet Ist und um einen Schwenkpunkt, insbesondere den Mittelpunkt der Kreisscheibe, drehbar und/oder schwenkbar gelagert ist, und wobei die Aufnahmerichtung oder der Sehstrahl der Bildaufnahmesinheit im wesentlichen horizontal verläuft und vorzugsweise auf einen Punkt auf dem vorgegebenen Weg gerichtet ist, in dem die Spielkugel der Bildaufnahmeeinheit am nächsten ist.

Weiters kann vorgesehen sein, dass ein Einlass vorgesehen ist, der sich unmittelbar oberhalb eines Punkts auf dem vorgegebenen Weg liegt, wobei insbesondere unmittelbar unterhalb des Einlasses eine elastische Dämpfungseinheit zum Abbremsen einer Spielkugel vorgesehen ist. Dies verhindert eine Zerstörung der Spielkugeln und verlängert die Lebenszeit des Spielautomaten wie der Spielkugeln.

Ein besonderer Aspekt der Erfindung sieht vor, dass unterhalb der scheibenförmigen Kugelführungseinhett eine Grundplatte zur Abstützung und Führung der Spielkugeln vorgesehen ist Dies ermöglicht einen mechanisch einfachen Aufbau und bewirkt, dass die Spielkugel während ihres Laufs entlang des vorgegebenen Wegs rotiert und somit die Wahrscheinlichkeit zur fehlerfreien Detektion der Symbole steigt, da die Spielkugel aus unterschiedlichen Richtungen sichtbar ist.

Bevorzugterweise kann vorgesehen sein, dass am Ende des Wegs, insbesondere in der Grundplatte, eine Ausnehmung von der Größe einer Spielkugel vorgesehen ist, sodass eine Spielkugel durch diese Ausnehmung hindurchfallen kann. Dies ermöglicht einen einfachen Abtransport der Spielkugel nach erfolgter Identifikation.

Weiters kann ein Monitor vorgesehen sein, der von der Bildaufnahmeeinheit laufend In vorgegebenen zeitlichen Abständen aufgenommene Bilder darstellt. Dies ermöglicht eine Vielzahl unterschiedlicher voneinander unabhängiger Identifikationsvorgänge und erhöht die Detektionsgenaulgkelt bzw. -Sicherheit. Es wird dem Spieler eine bessere Übersicht über das Spiel gewährt und dem Spieler der Eindruck eines manipulationsfreien und fairen Spiels suggeriert.

Zur verbesserten Sichtbarkeit und zur Erhöhung der Aufnahmequalität der Kugel durch die Bildaufnahmeeinrichtung kann vorgesehen sein, dass die Ausnehmung bis zum Rand der Kugelführungseinheit fortgesetzt ist und eine Hemisphäre der Spielkugel in zumindest einer Position des Wegs vollständig von der Bildaufnahmeeinheit dargestellt ist und insbesondere von der Kugelführungseinheit nicht verdeckt ist.

Die Erfindung wird im folgenden ohne Einschränkung des allgemeinen erfinderischen Gedankens anhand eines bevorzugten Ausführungsbeispiels, dargestellt in den folgenden Figuren, erläutert.

### Figurenbeschreibung

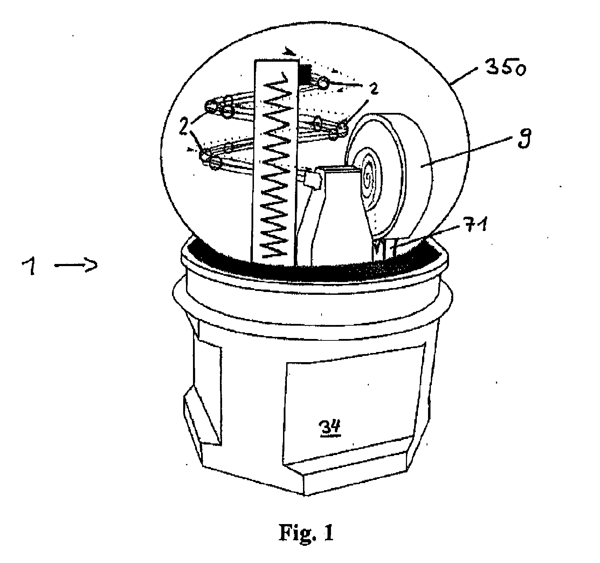

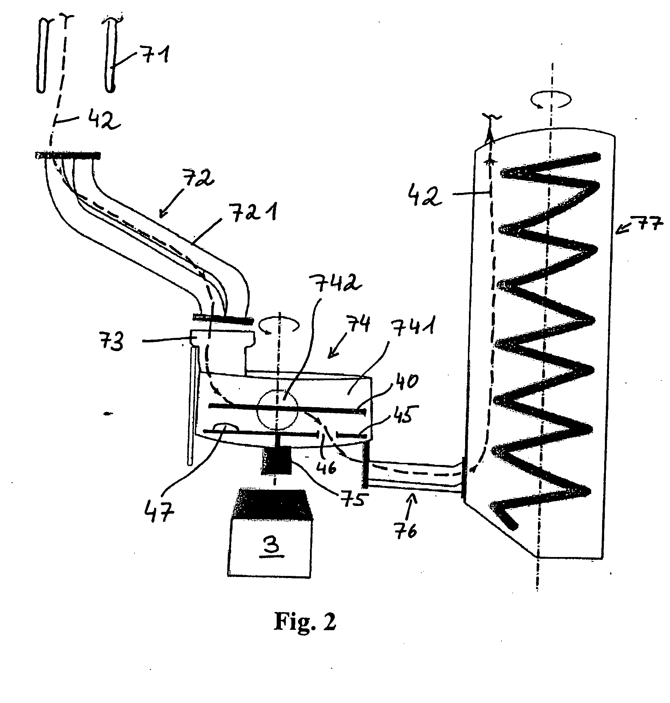

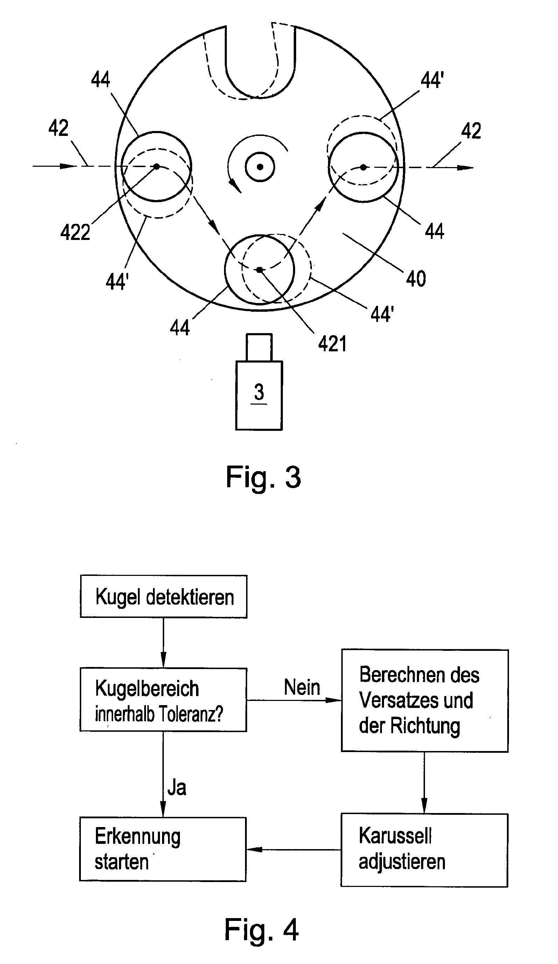

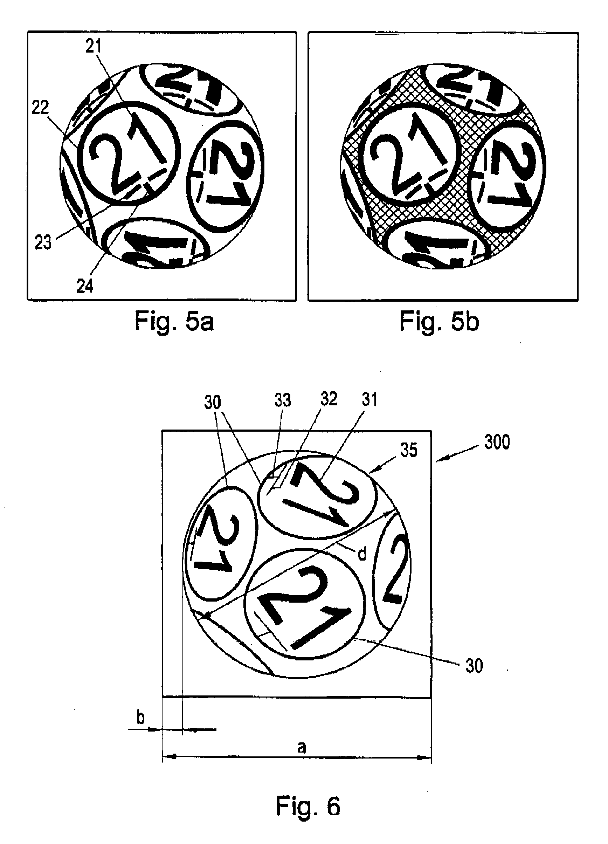

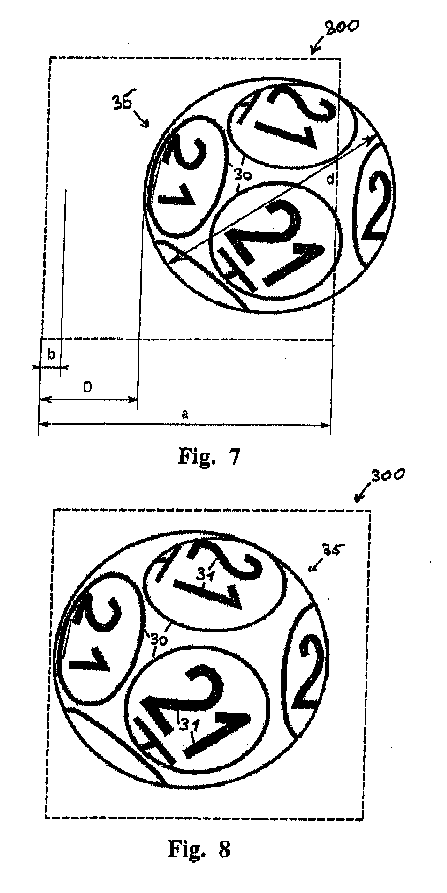

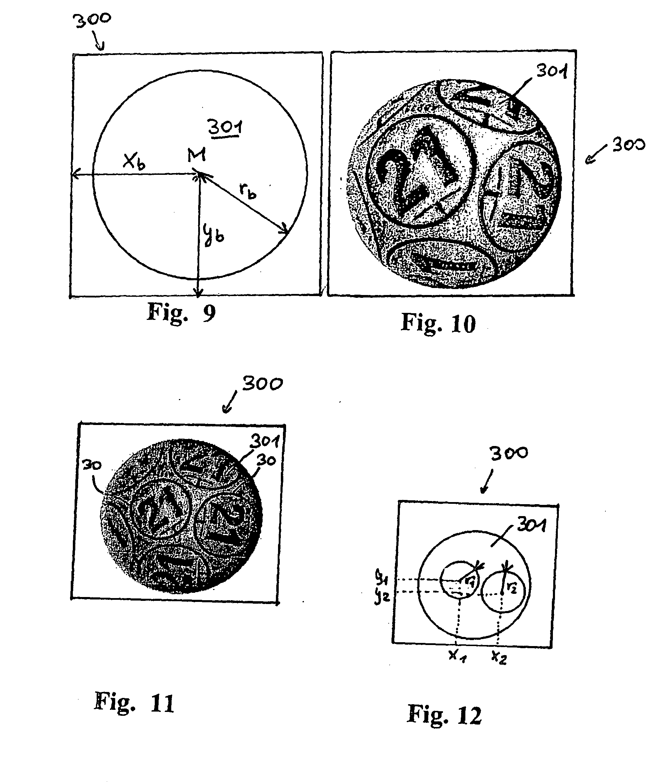

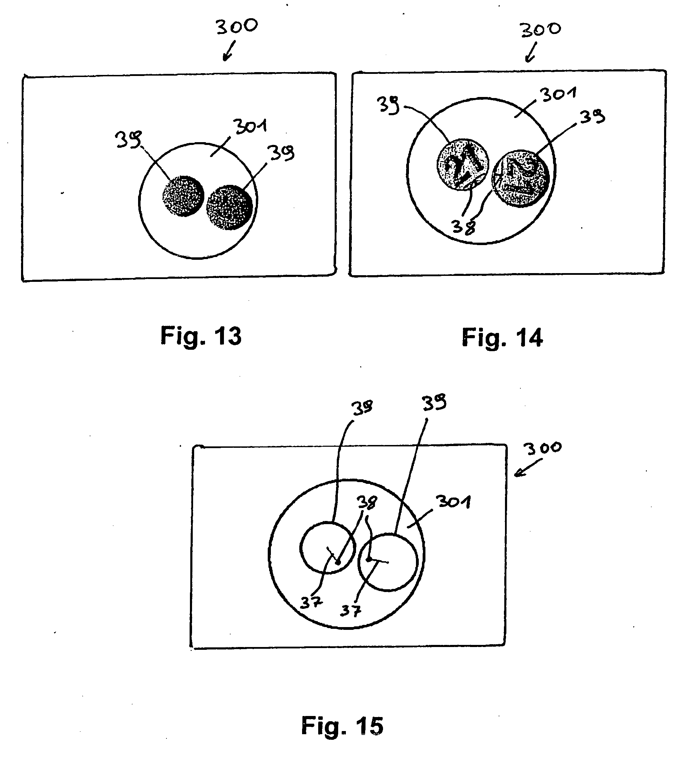

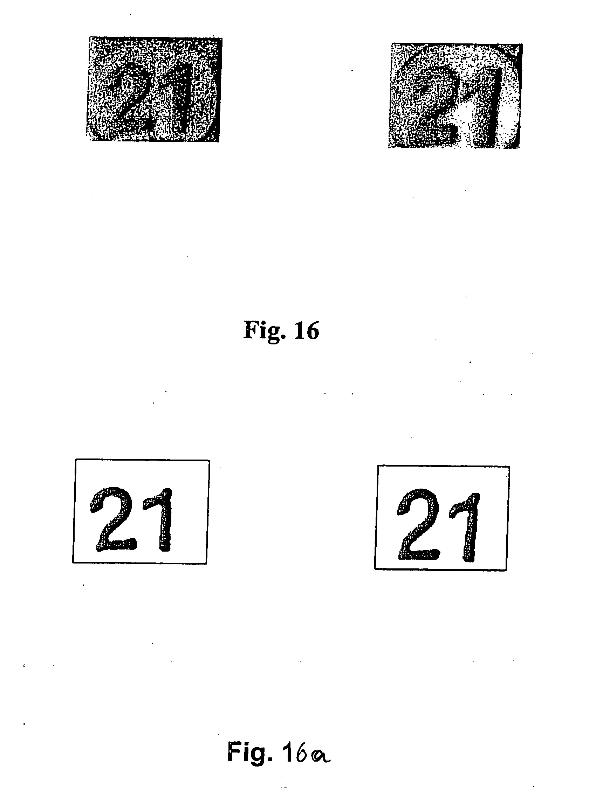

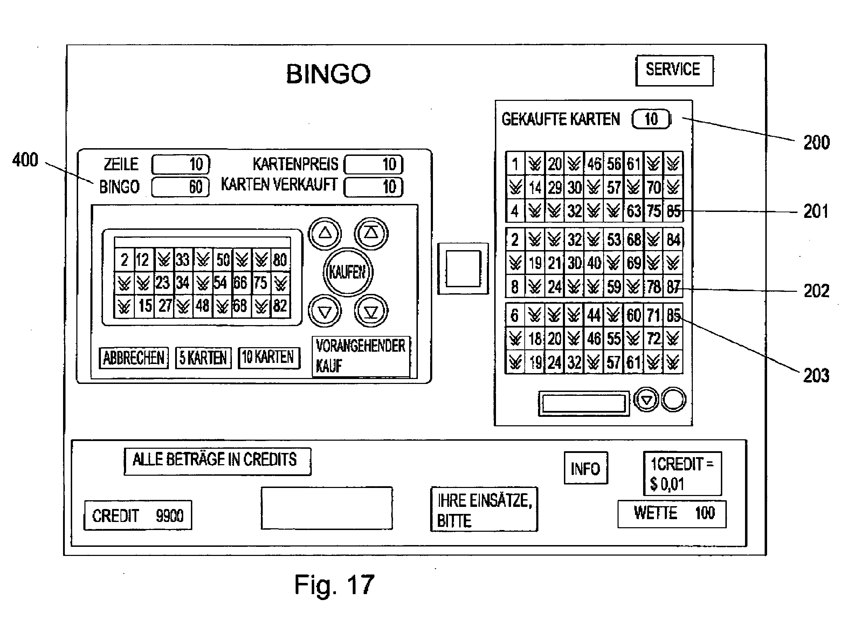

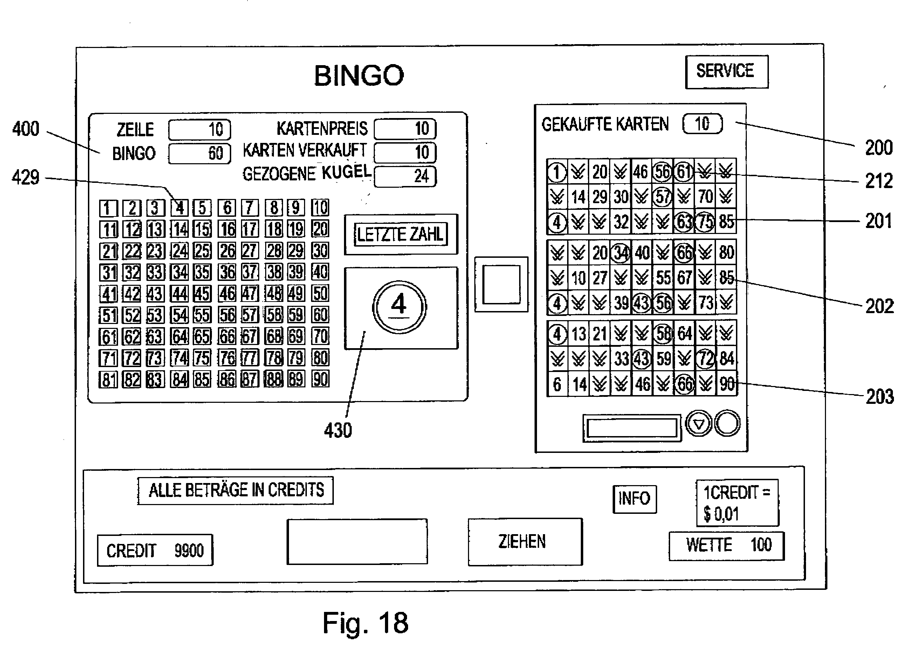

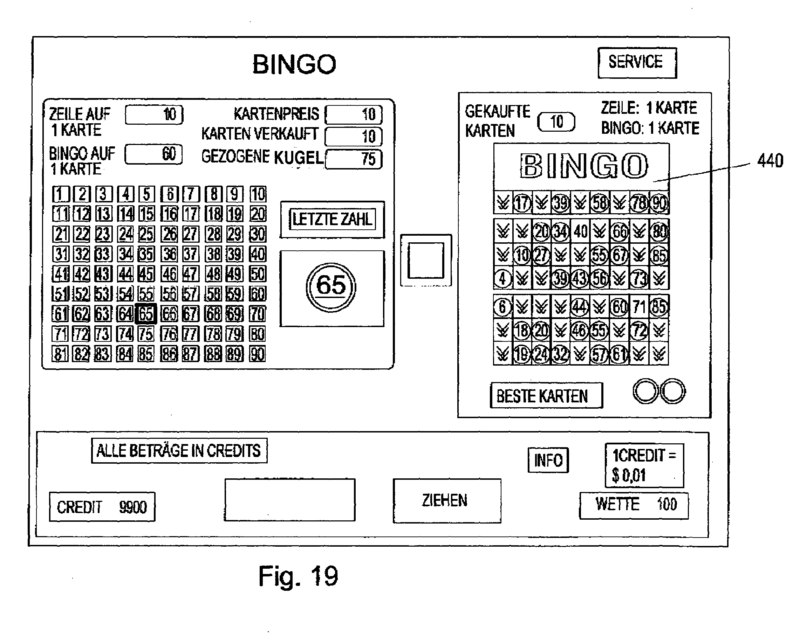

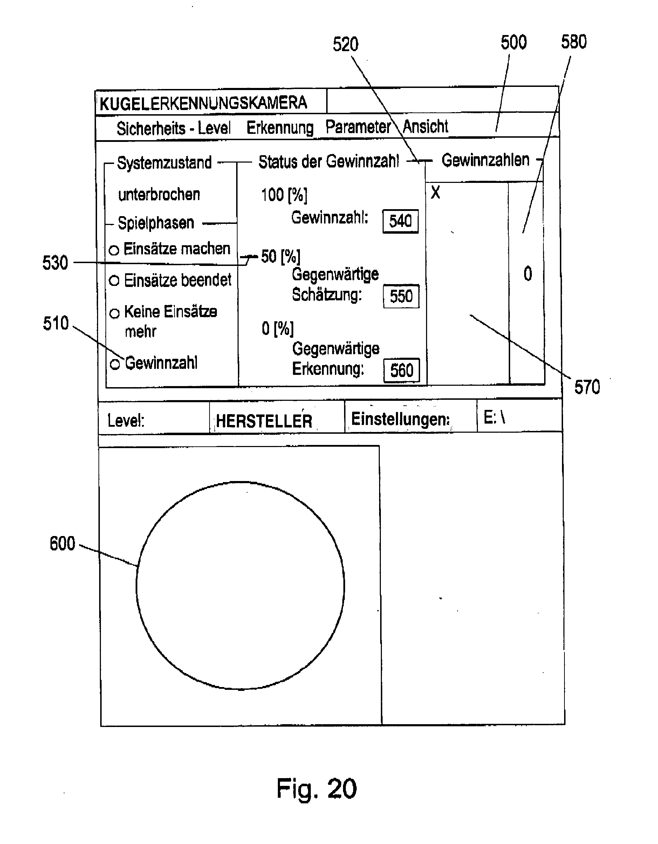

Fig. 1 zeigt einen Kugelziehungsautomaten 1. Fig. 2 zeigt schematisch eine vorteilhafte Ausgestaltung einer erfindungsgemäßen Vorrichtung zur Identifikation der Spielkugeln 2 im Detail. Der Aufbau und die Funktionsweise des Karussells ist In Fig. 3 schematisch dargestellt. Das Verfahren zum Verstellen des Karussells 74 ist in Fig. 4 dargestellt. Eine typische Spielkugel ist in den Fig. 5a, 5b in Farbe bzw. Schwarz/weiß dargestellt. Fig. 6 zeigt die Ermittlung der Position der Spielkugel im Bild. Fig. 7 zeigt eine falsch positionierte Spielkugel. Fig. 8 zeigt eine korrekt positionierte Spielkugel. Fig. 9 zeigt den aufgrund der Detektion der Kugel ermittelten Kreis. Fig. 10 zeigt denjenigen Bereich des von der Bildaufnahmeeinheit erstellten Bilds, der durch die Mitteipunktskoordinaten und den Radius charakterisiert ist. Das Ergebnis der Entzerrung ist in Fig. 11 dargestellt. Fig. 12 zeigt die Position der ermittelten Kreise auf den jeweiligen Kugeln. Fig. 13 zeigt die Masken für die ermittelten Kreise, Fig. 14 zeigt die In den Masken bzw. In den Kreisen befindlichen Bildbereiche. Fig. 15 zeigt die Ausrichtung der Symbole in den jeweiligen Bildbereichen. Fig. 16 zeigt die normalisierten. d. h. rotierten und skalierten Bildbereiche mit den Symbolen, Fig. 16a zeigt die In Fig. 16 dargestellten Bildbereiche nach einer Schwellenwertoperation. Fig. 17 zeigt den Displayinhalt eines Terminals für einen Spieler während der Phase zur Festlegung der Einsätze. Fig. 18 zeigt den Displayinhalt Terminal während der Ziehung. Fig. 19 zeigt den Displaylnhalt Terminal im Falle eines Spielgewinns. Fig. 20 zeigt das User-Interface für den Spielebetreiber.

### Beschreibung einer bevorzugten Ausführungsform der Erfindung

**Fig. 1** zeigt einen Kugelziehungsautomaten 1 zur Ziehung von Kugeln 2 für ein Bingospiel, im vorliegenden Fall handelt es sich um eine Automatenanordnung 1 mit einem Sockel 34 sowie einem auf dem Sockel 34 aufgebauten Kugelziahungsautomaten 1. Rund um den Kugelziehungsautomaten 1 ist eine sphärische Glashülle als Abdeckung 350 angeordnet, die den unmittelbaren Zugriff eines Spielers auf den Kugelziehungsautomaten 1 verhindert. Die Glashülle ist im vorliegenden Fall transparent ausgebildet. Dies hat insbesondere den Vorteil, dass der Kugelziehungsautomat 1 bzw. die Automatenanordnung zentral in Räumen aufgestellt bzw. angeordnet werden kann und dass einzelne Spieler rund um die Automatenanordnung 1 Aufstellung nehmen können. Alternativ kann Glashülle 350 auch zumindest teilweise opak bzw. undurchsichtig ausgebildet sein, wobei vorteilhafterweise die Sicht auf die wesentlichen Teile des Spielautomaten frei ist.

Diese Abdeckung 350 Ist Im vorliegenden Fall sphärisch ausgebildet, aufgrund ihres wesentlichen Zwecks, den Kugelziehungsautomaten 1 vor dem Zugriff von Spielern zu schützen, kann jedoch jede beliebige andere Form, etwa auch eine zylindrische Form oder eine Kegelform gewählt werden, solange der Zugriff einzelner Spieler auf den Kugelziehungsautomaten 1 verhindert wird.

**Fig. 2** zeigt schematisch eine vorteilhafte Ausgestaltung einer erfindungsgemäßen Vorrichtung zur Identifikation der Spielkugeln 2. Nach der Ziehung in der Ziehungstrommel 9 gelangt die ausgewählte Spielkugel 2 über ein Fallrohr 71 in eine Kugelführung 72. Die Kugelführung 72 umfasst einen Körper mit einer Anzahl angeordneten Stangen 721, innerhalb derer die Spielkugel 2 geführt wird. Durch die Stangen 721 Ist ein Weg 42 vorgegeben, entlang dessen sich eine durch das Fallrohr 71 fallende Spielkugel 2 weiter fortbewegt. Die Spielkugel 2 gelangt am Ende der Kugelführung 72 in einen Einlass 73 in Form eines Einwurfkorbs 73. Die Spielkugel 2 wird im Einwurfkorb 73 in ihrer horizontalen Bewegung abgebremst und fällt durch den Einwurfkorb 73 senkrecht nach unten in den Bereich eines Karussells 74.

Der Aufbau und die Funktionsweise des Karussells 74 ist in Fig. 3 schematisch dargestellt, Das Karussell 74 umfasst eine Kugelführungseinheit 4 in Form einer dünnen kreisförmigen, in **Fig. 3** dargestellten Platte 40. Die Platte 40 ist um eine normal zur Plattenebene und durch den Kreismittelpunkt der Platte 40 verlaufende Achse drehbar bzw. schwenkbar gelagert. Die Drehung erfolgt im vorliegenden Beispiel von oben betrachtet gegen den Uhrzeigersinn. Die Platte 40 bzw. die Kugelführungseinheit 4 weist vier entlang des Umfangs angeordnete kreisförmige Ausnehmungen 44 auf, die etwas größer sind als der Durchmesser der jeweiligen Spielkugel 2. Im Zuge der Drehung bewegen sich die Ausnehmungen 44 in Umfangsrichtung der kreisförmigen Platte 40 fort und sind in einer versetzten Position strichliert dargestellt mit dem Bezugszeichen 44'.

Unmittelbar unterhalb der drehbar oder schwenkbar gelagerten Platte 40 der Kugelführungseinheit 4 befindet sich eine Grundplatte 45. Im Bereich unmittelbar unterhalb des Einwurfkorbs 73 bzw. des Einlasses 73 befindet sich auf der Grundplatte 45 eine elastische Dämpfungseinheit 47, die die durch den Einwurfkorb 73 fallende Spielkugel 2 abbremst und dafür sorgt, dass die jeweilige Spielkugel 2 nicht beschädigt wird. In einer besonderen Ausführungsform der Erfindung ist vorgesehen, dass die elastische Dämpfungseinheit 47 durch ein Gummiband bzw. einen Gummipuffer ausgeführt ist, das unmittelbar unterhalb des Einwurfkorbs 73 auf der Grundplatte 45 angeordnet ist Das Gummiband ist dabei derart angeordnet, dass kein Tell der Spielkugel 2 beim unmittelbaren Auftreffen die Grundplatte 45 berührt. Nachdem der Fall der Spielkugel 2 abgebremst ist und diese in der Ausnehmung 44 der Platte 40 ruht und durch die Grundplatte 45 abgestützt ist, wird die Platte 40 rotiert und die in der Ausnehmung 44 befindliche Spielkugel 2 entlang eines vorgegebenen kreisförmigen Wegs 42 rotiert und/oder fortbewegt. Wie in Fig. 2 dargestellt, weist das Karussell 74 eine seitliche Verkleidung 741 auf, die eine Ausnehmung 742 aufweist. Die Bildaufnahmeeinheit 3 ist horizontal auf die Ausnehmung 742 gerichtet. Somit können Spielkugeln 2, die sich im Inneren des Karussells 74 befanden, von der außerhalb des Karussells 74 befindlichen Bildaufnahmeeinheit 3 aufgenommen werden. Dreht sich die Platte 40 des Karussells 74 gegen den Uhrzeigersinn, so gelangt die ausgewählte Spielkugel 2 auf ihrem vorgegebenen Weg 42 durch das Karussell 74 durch den Aufnahmebereich der Bildaufnahmeeinheit 3 und wird von dieser erfasst.

Das Karussell 74 ist von einem Motor 75, im vorliegenden Fall mit einem Schrittmotor 75, angetrieben, der sich unterhalb der Grundplatte 45 befindet und der mit der Grundplatte 45 verbunden ist.

Alternativ kann auch vorgesehen sein, dass die Ausnehmungen 44 bis zum Rand der Platte 40 bzw. der Kugelführungseinheit 4 fortgesetzt ist, wie in Fig. 3 in der alternativen Ausnehmung dargestellt. Eine solche alternative Ausnehmung hat den erheblichen Vorteil, dass die Spielkugel 2 während ihrer Aufnahme durch die Bildaufnahmeeinheit 3 nicht verdeckt bzw. abgedeckt ist. in dieser alternativen Ausführungsform kann vorgesehen sein, dass die Spielkugel 2 durch die seitliche Verkleidung 741 des Karussells 74 oder auch durch im Bereich der Ausnehmung 742 der Verkleidung 741 befindliche durchsichtige Abdeckung geführt ist, sodass die Position der Spielkugel 2 auf dem Weg 42 festgelegt ist.

Der Rand der Ausnehmung der Platte 40 der Kugeiführungselnheit 4 bzw. des Karussells 74 verdeckt die ausgewählte Spielkugel 2 nicht einmal teilweise, sodass eine verbesserte Auswertung möglich ist. Die Darstellung unterschiedlicher Ausnehmungen 44 dient ledlglich der Illustration möglicher unterschiedlicher Arten der Führung der Spielkugel 2 im Karussell 74. Üblicherweise umfasst die Platte des Karussells 74 stets Ausnehmungen 44 derselben Form. Am Ende des vorgegebenen Wegs 42 ist in der Grundplatte 45 eine Ausnehmung 46 vorgesehen, durch die die Spielkugel 2 nach unten hindurchfallen kann. In diesem Ausführungsbeispiel ist diese Ausnehmung 46 kreisförmig ausgebildet. An diese Ausnehmung 46 schließt eine weitere Kugelführung 76 an, die die Spielkugel 2 an eine Hebevorrichtung 77 weitergibt.

Die Hebevorrichtung 77 führt die Spielkugel 2, über eine weitere nicht dargestellte Kugelführung 2 wieder der Ziehung zu. Gegebenenfalls können die gezogenen Spielkugeln 2 bis zum Abschluss des jeweiligen Spiels zwischengelagert und erst nach Abschluss des Spiels wieder der Ziehung zugeführt werden, um die mehrfache Ziehung einer Spielkugel 2 während desselben Spiels zu verhindern.

Eine typische Spielkugel 2 ist in **Fig. 5a, 5b** dargestellt. Die Spielkugel 2 trägt auf ihrer Oberfläche ein Symbol 21 mehrfach aufgedruckt, das sich innerhalb eines Kreises 22 befindet. In Schriftrichtung unterhalb des Symbols 21 befindet sich eine Markierungslinie 23, die mittels einer Hilfslinie 24, die in Schriftrichtung nach unten ragt und mit dem Kreis 22 verbunden ist.

Während sich die Spielkugel 2 im Aufnahmebereich der Bildaufnahmeeinheit 3 befindet, erstellt die Bildaufnahmeeinheit 3 laufend Aufnahmen der Spielkugel 2. In der vorteilhaften Ausgestaltung der Erfindung wird die Spielkugel 2 auf ihrem Weg in einer Position 421 im Aufnahmebereich der Bildaufnahmeeinheit 3 angehalten. Altemativ kann auch vorgesehen sein, dass die Bildaufnahmeeinheit 3 schwenkbar gelagert durch einen weiteren Motor ist und der Spielkugel 2 nachgeführt ist, wobei der Massenmittelpunkt M des Abbilds der Spielkugel 2 im Bild konstant gehalten wird. Zu diesem Zweck ist dem weiteren Motor (in der Fig. nicht dargestellt) eine Steuereinheit vorgeschaltet, die der Bildaufnahmeeinheit 3 nachgeschaltet ist und den weiteren Motor derart ansteuert, dass sich das Abbild der Spielkugel vollständig im Aufnahmebereich der Bildaufnahmeeinheit 3 befindet.

Die von der Bildaufnahmeeinheit 3 aufgenommenen Bilder werden zusätzlich auf einem den Spielern zugewandten, nicht dargestellten, Monitor dargestellt.

Eine Aufnahme einer Spielkugel 2 ist schematisch in **Fig. 5a, 5b** dargestellt. Das von der Bildaufnahmeeinheit 3 erstellte Bild 300 ist in Fig. 6 dargestellt und zeigt ein Abbild 35 der Spielkugel 2. Ferner sind ein Abbild 31 des jeweiligen Symbols 21, ein Abbild 32 der Markierungslinie 23 und ein Abbild 33 der jeweiligen Hilfslinie 24 sowie ein Abbild 30 des Kreises 22 dargestellt.

Zunächst wird die Bildposition des Abbilds 35 der Spielkugel 2 in dem von der Bildaufnahmeeinheit 3 erstellten Bild 300, dargestellt In **Fig. 6**, ermittelt. Es werden der Durchmesser d des Abbilds 35 der Spielkugel 2 und der seitliche Abstand b des Abbilds 35 der Spielkugel 2 vom linken Bildrand - jeweils in Pixeln - ermittelt. Ausgehend von der durch die Bildaufnahmeeinheit 3 festgelegten Bildbreite a des Bilds kann ein optimaler Seitenabstand b - angegeben in Pixeln - errechnet werden. Es ergibt sich: b = (a-d)/2-Weicht die Position der Spielkugel 2 von der optimalen Position ab, so befindet sich der linke Rand des Abbilds 35 der Spielkugel 2 an einer von b abweichenden Position D. Eine derartige Situation ist in den **Fig. 7 und 8** dargestellt. Die Abweichung der Position D vom optimalen linken Seitenrand kann bestimmt werden, wobei die Differenz mit einem Schwellenwert T verglichen wird. Übersteigt die Differenz den Schwellenwert, befindet sich insbesondere das Abbild 35 der Spielkugel 2, wie in **Fig. 7** dargestellt, teilweise außerhalb des Bilds, wird die Spielkugel 2 neu positioniert.

Beispielsweise kann die Spielkugel 2 zu diesem Zweck auf dem Weg 42 in eine Ausgangslage 422 (Fig. 3) zurückgesetzt werden und die gesamte Bewegung der Spielkugel 2 durch den Aufnahmebereich der Bildverarbeitungseinheit 3 wiederholt werden. Es ist jedoch bei der Verwendung eines präziser positionlerbaren Motors 75. etwa von Schrittmotoren auch möglich, die falsch positionierte Spielkugel 2 erfindungsgemäß anhand der errechneten Position D entlang oder entgegen der Fortbewegungsrichtung des Wegs zu verstellen und die Ermittlung der Position der Spielkugel D so lange zu wiederholen, bis sich die Spielkugel 2 zur Gänze im Aufnahmebereich der Bildverarbeitungseinheit 3 befndet und das Abbild 35 der Spielkugel 2 vollständig in dem von der Bildaufnahmeeinheit 3 erstellten Bild enthalten ist. Das Verfahren zum Verstellen des Karussells 74 ist in **Fig. 4** dargestellt.

Nachdem die Spielkugel 2 durch die Bildaufnahmeeinheit 3 vollständig erfasst worden ist, wird ein Identifikationsverfahren gestartet, das basierend auf dem von der Bildaufnahmeeinheit 3 erstellten Bild das auf der Spielkugel 2 abgebildete Symbol 21 ermittelt. In diesem besonderen Ausführungsbeispiel erstellt die Bildaufnahmeeinheit 3 Farbbilder (Fig. 5a), die jedoch vor der weiteren Verarbeitung in Greustufenbilder (Fig. 5b) umgerechnet werden.

In einem ersten Schritt wird mittels eines Detektionsverfahrens die Bildposition und die Größe des Kreises ermittelt und in Form der Mittelpunktskoordinaten xb, yb sowie des Durchmessers oder des Radius rb abgespeichert. Es wird der in **Fig. 9** erstellte Kreis mit den ermittelten Koordinaten und dem ermittelten Radius zur weiteren Verarbeitung zur Verfügung gehalten. **Fig. 10** zeigt derjenigen Bereich 301 des von der Bildaufnahmeeinheit 3 erstellten Bilds 300, der durch die Mittelpunktskoordinaten xb. yb und den Radius rb charakterisiert ist.

In einem weiteren Schritt wird die Verzerrung, die durch die sphärische Oberfläche der Spielkugeln 2 bewirkt wird durch eine Entzerrung behoben. Verfahren zur Entzerrung von auf einer Kugeloberfläche aufgedruckten Symbolen sind dem Fachmann aus dem Stand der Technik allgemein bekannt. Gegebenenfalls kann eine Kalibrierung stattfinden, mittels derer auf der Spielkugel 2 befindliche kreisförmige Bereiche einfach auf kreisförmige Bereiche des entzerrten Bilds abgebildet werden. Das Ergebnis der Entzerrung ist in **Fig. 11** dargestellt, wobei lediglich sehr geringe Restfehler bzw. Restverzerrungen verbleiben. Die Entzerrungsoperation urnfasst ferner eine Skalierung des Bilds. sodass das entzerrte Bild dieselbe Größe aufweist wie das Originalbild.

Weiters werden, wie in **Fig. 12** dargestellt, diejenigen Positionen detektiert, in denen sich die Abbilder 30 der auf den Spielkugeln 2 aufgedruckten Kreise 22 befinden. Es werden, etwa mittels einer Hough-Transformation Kreise detektiert, wobei nach der Durchführung dieses Erkennungsschritts sowohl die Mittelpunkte (x1. y1), (x2, y2) als auch die Radien r1, r2 der jeweiligen Abbilder 30 der auf den Spielkugeln 2 aufgedruckten Kreise 22 zur Verfügung stehen.

Wie in **Fig. 13** dargestellt, werden die in den detektierten Kreisen befindlichen Bildbereiche bzw. Masken 39 maskiert, wobei in **Fig. 13** die jeweils zugehörigen Masken 39 dargestellt sind. **Fig. 14** zeigt die durch die Masken 39 maskierten Bildbereiche des entzerrten Bilds.

Für jeden der markierten Bildbereiche bzw. für jede der Masken 39 wird ein Markierungspunkt 38 ermittelt, der sich als Schnittpunkt der jeweiligen Abbilder 31, 32 der Markierungslinie 23 und der Hilfslinie 24 der jeweiligen Spielkugel 2 ergibt. **Fig. 15** zeigt die beiden detektierten Masken 39, wobei auf jeder der Masken 39 eine Verbindungslinie 37 zwischen dem jeweiligen Mittelpunkt der Maske 39 und dem jeweiligen Markierungspunkt 38 dargestellt Ist. Die Verbindungslinie 37 steht in einem Winkel zur x-Achse bzw. zur y-Achse des aufgenommenen Bilds. Im nächsten Schritt werden die einzelnen maskierten kreisförmigen Bildbereiche bzw. Masken 39 derart gedreht, dass die Verbindungslinien 37 parallel zur y-Achse ausgerichtet sind. **Fig. 16** zeigt ein Abbild der beiden maskierten Bildbereiche, wobei jeder der Bildbereiche - wie bereits erwähnt - zuvor entsprechend rotiert worden ist, sodass die Symbole 21 bzw. deren Abbild 31 zu den Koordinaten des Bilds gerade ausgerichtet sind. Weiters werden die maskierten Bildbereiche auf eine vorgegebene Größe skaliert

Anschließend werden die maskierten Bildbereiche einer Schwellenwertoperation unterzogen, wobei die einzelnen Helligkeitswerte der jeweiligen Pixel mit einem Schwellenwert verglichen werden und das Pixel im Falle des Unterschreitens des Schwellenwerts auf den Wert "Schwarz" bzur. "Null" gesetzt wird und im Falle des Überschreitens des Schwellenwerts auf "Weiß" bzw. "Eins" gesetzt wird. **Fig. 16a** zeigt das Ergebnis der Anwendung einer Schwellenwertoperation auf die jeweiligen markierten Bildbereiche. Die markierten Bildbereiche werden einem Symbolerkennungsverfahren zugeführt Ganz generell kann hierfür jeder beliebige bekannte Symboferkennungsalgorithmus (OCR) verwendet werden. Aus dem Stand der Technik ist eine Vielzahl von OCR-Verfahren bekannt, die im Rahmen der Erfindung gleichermaßen Anwendung finden können. Es wird ein Identifikationsresultat ermittelt, das dem Symbol 21 entspricht, wobei vorab eine Zuordnung zwischen den Symbolen und einem entsprechenden Identifikationsresultat vorgegeben wird. Für jede Maske 39 wird jeweils ein Identifikationsresultat erhalten.

Das Bilderkennungsverfahren kann gegebenenfalls mit einer Vielzahl unterschiedlicher zeitlich hinter einander von der Bildaufnahmeeinheit 3 ermittelter oder erstellter Bilder durchgeführt werden. Für jedes der Bilder wird separat das oben genannte Identifikationsverfahren durchgeführt und für jede einzelne Maske 39 erhält man Jewells ein Identifikationsresultat.

Idealerweise erhält man identische Identifikationsresultate. Es kann jedoch bei nur schlecht sichtbaren, teilweise verdeckten oder stark verzerrten Bilderbeichen das Problem auftreten, dass eine eindeutige Identifikation des Jewelligen Symbols nicht möglich ist. In diesem Fall ist vorgesehen, dass eine Identifikation nur dann als korrekt erfolgt gilt, wenn mehr als die Hälfte der Identifikationsresultate identisch ist.

In den **Fig. 17 bis 19** sind unterschiedliche User-Interfaces für Spieler dargesteilt, in **Fig. 20** ist ein User-Interface für den Automatenbetreiber dargestellt. Jedem Spieler ist im vorliegenden Ausführungsbeispiel jeweils ein Terminal oder ein - etwa über das Internet - mit dem Server des Spielbetrelbers verbundener Rechner zugeordnet. Jeder Spieler hat einen Bildschirm, an dem die Spielsituation graphisch ansprechend dargestellt ist Der Spieler verfügt über ein Zeigegerät, etwa eine Maus oder einen Touchscreen. mittels dessen er eine Position auf dem Bildschirm anwählen und einen dargestellten Eingabeknopf betätlgen kann.

**Fig. 17** zeigt den am Bildschirm dargestellten Inhalt vor dem Spielbeginn. Zu diesem Zeitpunkt können die Bingo Karten gekauft werden. Auf der rechten Seite 200 sind die gekauften Bingo-Karten 201, 202, 203 dargestellt. Auf der linken Seite 400 können unterschiedliche Bingo-Karten vor dem Kauf ausgewählt werden. Mit dem Kaufknopf können einzelne Bingo-Karten gewählt werden. Es können auch gleichzeitig durch Anwählen von Mehrfachkaufknöpfen fünf oder zehn Bingo-Karten gekauft werden. Durch Betätigen des Abbruch-Knopfs 405 kann der Kauf abgebrochen werden, das Spiel beginnt.

**Fig. 18** zeigt den am Bildschirm dargestellten Inhalt während des Spielveriaufs. Unter anderem ist bereits eine Anzahl von Zahlen auf den rechts dargestellten Bingo-Karten 201, 202, 203 markiert, d. h. es wurden bereits Spielkugeln 2 mit den entsprechenden Zahlen gezogen und die Zahlen auf der Bingo-Karte sind durch einen Kreis 212 markiert. Die letzt gezogene Nummer wird zusätzlich in fett und in Farbe angezeigt.

Auf der linken Seite 400 wird ein Zahlenraster mit den Zahlen von eins bis neunzig angezeigt, wobei die letzt gezogene Nummer 429 farbig oder fett und die bereits gezogenen Nummern hell sind. Nicht gezogene Nummern werden grau angezeigt. Weiters wird die letzt gezogene Nummer in einem Feld 430 entweder als animierte Kugel dargestellt oder es wird das von der Blidaufnahmeeinheft 3 erstellte Bildsignal direkt als Live-Vdeo dargestellt.

**Fig. 19** zeigt den Bildschirminhalt, wenn ein Spielgewinn vorliegt. Eine Aufschrift 440 wird der rechten Seite überlagert.

**Fig. 20** zeigt den Bildschirminhalt 500 für den Automatenbetreiber. Im Unterfenster "Spielphasen" 510 wird die jeweilige Spielphase, also Einkaufsphase zum Einkauf von Karten (**Fig. 17**), Abschluss der Einkaufsphase, eigentliche Spielphase (Fig. 18) und Gewinn (**Fig. 19**) an. Das Unterfenster "Status der Gewinnzahl" 520 zeigt den aktuellen Status der Identifikation der Spielkugeln 2 an. Es wird ein Schwellenwert auf 50% festgelegt, der durch einen Balken 530 dargestellt ist. Wird eine Gewinnzahl von fünf Erkennungen dreimal gezogen, so wird diese Zahl als Gewinnzahl festgelegt. Im Feld "Gewinnzahl" 540 wird die endgültige Gewinnzahl angezeigt. Im Feld "Gegenwärtige Schätzung" 550 wird die momentan erwartete Gewinnzahl während des Erkennungsprozess angezeigt. Im Feld "Gegenwärtige Erkennung" 560 wird die momentan erkannte Gewinnzahl während des Erkennungsprozess angezeigt. Im Unterfenster "Gewinnzahlen" werden einerseits die bereits ermittelten Gewinnzahlen im Feld 570 andererseits einen Balken 580 dargestellt, der grafisch den Fortschritt der Ziehung veranschaulicht Im Feld 600 wird das von der Bildaufnahmeelnheit 3 erstellte Bildsignal direkt als Live-Video dargestellt.

## Patentansprüche

1. Verfahren zur Identifikation einer ausgewählten Spielkugel (2) aus einer vorgegebenen Anzahl von Spielkugeln (2), wobei jede der Spielkugeln (2) jeweils mit einem Symbol versehen ist, das von den Symbolen der übrigen Spielkugeln (2) abweicht,
a) wobei die ausgewählte Splelkugel (2) aus einer Ausgangslage (422) durch den Aufnahmebereich einer Bildaufnahmeeinheit (3) bewegt wird,
b) wobei der Massenmittelpunkt (M) des Abbilds der ausgewählten Spielkugel (2) im Bild (300) der Bildaufnahmevorrichtung (3) für einen vorgegebenen Zeitraum unverändert gehalten wird und keine Relativbewegung in Bezug auf das Bild (300) vollführt,
c) wobei die Bildposition und Größe des Abbilds der Spielkugel (2) ermittelt wird, und überprüft wird, ob Teile des Abbilds der Spielkugel (2) außerhalb eines vorab in Bezug auf das Bild (300) vorgegebenen seitlichen Rands liegen, und
d) falls Teile des Abbilds (35) der Spielkugel (2) außerhalb dieses seitlichen Rands liegen, die Spielkugel (2) anhand der errechneten Position entlang oder entgegen der Fortbewegungsrichtung des Wegs (42) der Spielkugel (2) verstellt wird und in den Aufnahmebereich der Bildaufnahmeeinheit (3) zurückgebracht und neu positioniert wird und die Schritte b) bis d) wiederholt werden, und
e) auf Basis zumindest eines mit der Bildaufnahmeeinheit (3) aufgenommenen Bilds (300) ein identitikationsverfahren durchgeführt wird und ein Identifikationsresultat ermittelt wird, das dem Symbol auf der Oberfläche der ausgewählten Spielkugel (2) entspricht oder eindeutig zugeordnet ist.

2. Verfahren nach Anspruch 1, **dadurch gekennzeichnet, dass** zur Festsetzung des Massenmittelpunkts der Abbildung der ausgewählten Spielkugel (2) Im Bild (300) der Bildaufnahmeeinheit (3) die Spielkugel (2) angehalten wird und relativ zur Bildaufnahmeeinheit (3) unbewegt verbleibt.

3. Verfahren nach Anspruch 1 oder 2, **dadurch gekennzeichnet, dass** die Spielkugel (2) mittels einer Kugelführungseinheit (4) aus der Ausgangslage (41) entlang eines vorgegebenen Wegs (42) durch den Aufnahmebereich der Bildaufnahmeeinheit (3) bewegt wird, wobei die jeweilige ausgewählte Spielkugel (2) nach ihrer Bewegung über den vorgegebenen Weg (42) aus der Kugelführungseinheit (4) entfernt und gegebenenfalls weitergeleitet wird,

4. Verfahren nach Anspruch 3, **dadurch gekennzeichnet, dass** die ausgewählte Spielkugel (2) auf dem vorgegebenen Weg (42) kreisbogenförmig auf einer horizontalen Ebene fortbewegt wird, wobei die Aufnahmerichtung oder der Seinstrahl der Bildaufnahmeeinheit (3) im wesentlichen horizontal verläuft und vorzugsweise auf einen Punkt auf dem vorgegebenen Weg (42) gerichtet ist, in dem die Spielkugel (2) der Bildaufnahmeeinheit (3) am nächsten ist.

5. Verfahren nach einem der Ansprüche 3 oder 4, **dadurch gekennzeichnet, dass** die Spielkugel (2) von einer kreisförmigen Ausnehmung (44) der im wesentlichen flach und scheibenförrnig ausgebildeten Kugelführungseinheit (4) aufgenommen und gegen ein seitliches Wegrollen gesichert wird, wobei
a) die Spielkugel (2) von oben in bzw. auf die kreisförmige Ausnehmung (44) geworfen wird oder fällt und wobei vorzugsweise der Fall der Spielkugel (2), insbesondere durch eine unterhalb der Ausnehmung (44) befindliche elastische Dämpfungseinheit (47), gebremst wird, und/oder
b) die Spielkugel (2) in der Ausnehmung (44) der kugelführungseinheit (4) geführt und/oder rotiert wird und auf einer unterhalb der scheibenförmigen Kugelführungseinheit (4) befindlichen Grundplatte (45) abgestützt wird und/oder
c) die Spielkugel (2) am Ende des Wegs (42) durch eine in der bzw. einer unterhalb der Kugelführungseinheit befindlichen Grundplatte (45) befindliche Ausnehmung (46) fällt und weiter transportiert wird.

6. Verfahren nach einem der vorangehenden Ansprüche, **dadurch gekennzeichnet, dass** die Bildaufnahmeeinheit (3) laufend in vorgegebenen zeitlichen Abständen Bilder (300) erstellt und diese Bilder (300) vorzugsweise auf einem Monitor für die Spieler sichtbar dargestellt werden.

7. Verfahren nach einem der vorangehenden Ansprüche, dadurch gekennzelchnet, dass während des vorgegebenen Zeitraums eine Anzahl von, insbesondere vier, Bildern (300) erstellt wird und die Identifikation der Spielkugel (2) basierend auf zumindest zwei zu unterschiedlichen Zeitpunkten aufgenommenen Bildern (300) erfolgt, wobei die Identifikation für jedes der Bilder (300) separat vorgenommen wird und wobei jede Identifikation eines Bilds (300) ein separates Identifikationsresultat liefert,
wobei eine Identifikation nur dann als korrekt erfolgt gilt, wenn eine vorgegebene Anzahl, insbesondere von zumindest der Hälfte, vorzugsweise sämtlicher, der Identifikationsresultate Identisch ist.

8. Verfahren nach einem der vorangehenden Ansprüche, **dadurch gekennzeichnet, dass** anhand eines aufgenommenen Bildes (300) ein Identiflkationsresultat ermittelt wird, wobei Schriftsymbole als Symbols herangezogen werden und wobei auf den Spielkugeln (2) jeweils in Kreisen (22) angeordnete Schriftsymbole (21) angeordnet sind, und wobei eine die Schriftrichtung darstellende Markierungslinie (23) vorgesehen ist, die insbesondere in Schrftichtung unterhalb angeordnet ist und gleichsam eine Unterstreichung des jeweiligen Schriftsymbols (21) darstellt, wobei die Markierungslinie (23), insbesondere mit dem Kreis (22), insbesondere über eine Hilfslinie (24) verbunden ist indem
a) Bereiche des Abbilds der Spielkugel (2) gesucht und als Erkennungsbereiche abgespeichert werden, die durch eine, insbesondere durchgezogene, Kreislinie begrenzt sind,
b) für sämtliche aufgefundenen kreisförmig umrandeten Bereiche die Ausrichtung des innerhalb des Bereichs befindlichen Symbols festgestellt wird,
die aufgefundenen Bildbereiche entsprechend ihrer Ausrichtung rotiert werden, sodass die ermittelten Symbole jeweils gleich ausgerichtet sind,
und
c) die in den ausgerichteten und/oder rotierten Bereichen befindlichen Schriftsymbole, zuerst gefiltert und anschließend, einem Symboierkennungsverfahren unterzogen werden und für jeden der ausgerichteten Bereiche ein das jeweilige Symbol darstellendes Identifikationsresultat ermittelt wird.

9. Verfahren nach Anspruch 8, **dadurch gekennzeichnet, dass** für sämtliche aufgefundenen kreisförmig umrandeten Bereiche die Ausrichtung des innerhalb des Bereichs befindlichen Symbols festgestellt wird, indem das Abbild einer an die Kreislinie angrenzenden oder mit dieser verbundenen Markierungslinie gesucht und deren Ausrichtung festgestellt wird.

10. Verfahren nach Anspruch 8 oder 9, **dadurch gekennzeichnet, dass** die Bildbereiche auf eine vorgegebene Größe skaliert werden, nachdem sie ausgerichtet wurden.

11. Verfahren nach Anspruch 8, 9 oder 10, **dadurch gekennzeichnet, dass** bei unterschiedlichen Identifikationsresultaten für mehrere Bereiche dasjenige Identifikationsresultat als ermittelt gilt, das für die meisten Bereiche erkannt worden ist

12. Vorrichtung zur Identifikation einer ausgewählten Spielkugel (2) aus einer vorgegebenen Anzahl von Spielkugeln (2), wobei jede der Spielkugeln (2) jeweils mit einem Symbol versehen ist, das von den Symbolen der übrigen Spielkugein (2) abweicht.
a) mit einer Bildaufnahmeeinheit (3), die einen Aufnahmebereich aufweist.
b) mit Mitteln (74, 75) zur Bewegung der ausgewählten Spielkugel (2) aus einer Ausgangslage durch den Aufnahmebereich der Bildaufnahmeeinheit (3),
c) mit einer Prüfungseinheit zur Prüfung der Position und Größe des Abbilds der Spielkugel (2), sowie zur Abgabe eines Positionierungs-Signals für den Fall, dass Teile des Abbilds der Spielkugal (2) außertlalb eines vorab in Bezug auf das Bild vorgegebenen seitlichen Rands liegen,
d) einer der Prüfungseinheit nachgeschalteten Positionierungseinheit, die bei Vorliegen eines Positionierungs-Signals an ihrem Eingang die Mittel (74, 75) zur Bewegung der ausgewählten Spielkugel (2) zu einer neuen Position und/oder zum Neupositionieren der Spielkugel (2) veranlasst, wobei die Vorrichtung dazu ausgebildet ist, die Spielkugel (2) anhand der errechneten Position entlang oder entgegen der Fortbewegungsrichtung des Wegs (42) der Spielkugel (2) zu versehen, sowie
e) einer Identifikationseinhelt zur Identifikation von auf den Spielkugeln (2) befindlichen Symbolen (21) auf Basis zumindest eines mit der Bildaufnahmeeinheit (3) aufgenommenen Bilds (300), an deren Ausgang ein Identifikationsresultat vorliegt, das einem Symbol (21) auf der Oberfläche der ausgewählten Spielkugel (2) entspricht oder eindeutig zuordenbar ist.

13. Vorrichtung nach Anspruch 12, **gekennzeichnet durch** eine Steuereinheit, die zur Festsetzung des Massenmittelpunkts (M) der Abbildung (35) der ausgewählten Spielkugel (2) im Bild der Bildaufnahmeeinheit (3) die Mittel (75, 40, 44, 45) zur Bewegung der Spielkugel (2) anhält oder inaktiv stellt, sodass die Spielkugel (2) relativ zur Bildaufnahmeeinheit (3) unbewegt verbleibt.

14. Vorrichtung nach Anspruch 12 oder 13, **dadurch gekennzeichnet, dass** eine Kugelführungseinheit (4) vorgesehen ist, mit der die Spielkugel (2) aus der Ausgangslage (422) entlang eines vorgegebenen Wegs (42) durch den Aufnahmebereich der Bildaufnahmeeinheit (3) bewegbar ist, wobei die jeweilige ausgewählte Spielkugel (2) nach ihrer Bewegung über den vorgegebenen Weg (42) aus der Kugelführungseinheit (4) fällt.

15. Vorrichtung nach Anspruch 14, **dadurch gekennzeichnet, dass** die Kugelführungseinheit (4) als flache, insbesondere durchsichtige, dünne Platte, insbesondere als Kreisscheibe, ausgebildet ist, die zur Aufnahme der Spielkugel (2) zumindest eine exzentrisch angeordnete, Insbesondere kreisförmige, Ausnehmung (44) aufweist, wobei die Platte der Kugelführungseinheit (4) horizontal angeordnet Ist und um einen Schwenkpunkt, insbesondere den Mittelpunkt der Kreisscheibe, drehbar und/oder schwenkbar gelagert ist, und wobei die Aufnahmerichtung oder der Sehstrahl der Bildaufnahmeeinheit (3) im wesentlichen horizontal verläuft und vorzugsweise auf einen Punkt (421) auf dem vorgegebenen Weg (42) gerichtet ist, in dem die Spielkugel (2) der Bildaufnahmeeinheit (3) am nächsten ist

16. Vorrichtung nach Anspruch 15, **dadurch gekennzeichnet,**
a) **dass** ein Einlass (73) vorgesehen ist, der unmittelbar oberhalb eines Punkts auf dem vorgegebenen Weg (42) liegt, wobei insbesondere unmittelbar unterhalb des Einlasses (73) eine elastische Dämpfungseinheit (47) zum Abbremsen einer Spielkugel (2) vorgesehen ist, und/oder
b) **dass** unterhalb der scheibenförmigen Kugelführungseinheit (4) eine Grundplatte (45) zur Abstützung und Führung der Splelkugein (2) vorgesehen ist, und/oder
c) **dass** am Ende des Wegs (42), Insbesondere in der Grundplatte (45), eine Ausnehmung (46) von der Größe einer Spielkugel (2) vorgesehen ist, sodass eine Spielkugel (2) durch diese Ausnehmung (46) hindurchfallen kann.

17. Vorrichtung nach Anspruch 15 oder 16, **dadurch gekennzeichnet, dass** die Ausnehmung (44) der Kugelführungselnheit (4) bis zum Rand der Kugelführungseinheit (4) fortgesetzt ist und eine Hemisphäre der Spielkugel (2) in zumindest einer Position des Wegs (42) vollständig von der Bildaufnahmeeinheit (3) dargestellt ist und insbesondere von der Kugelführungseinheit (4) nicht verdeckt ist.

18. Vorrichtung nach einem der Ansprüche 12 bis 17, **gekennzeichnet durch** einen Monitor, der von der Bildaufnahmeeinhelt (3) laufend In vorgegebenen zeitlichen Abständen aufgenommene Bilder (300) darstellt.

## Claims

1. A method of identifying a selected gaming ball (2) from a predefined number of gaming balls (2), each of the gaming balls (2) being provided with a symbol, which is different from the symbols of the other gaming balls (2),
a) wherein the selected gaming ball (2) is moved from a starting position (422) through the acquisition area of an image recording unit (3),
b) wherein the center of mass (M) of the image of the selected gaming ball (2) is maintained unaltered in the image (300) of the image recording unit (3) for a predefined period of time and does not perform a relative movement with respect to the image (300),
c) wherein the image position and size of the image of the gaming ball (2) is determined and it is verified whether parts of the image of the gaming ball (2) are located outside a lateral edge predefined with respect to the image (300), and,
d) if parts of the image (35) of the gaming ball (2) are outside of this lateral edge, the gaming ball (2) is shifted based on the calculated position along or opposite the progressing direction of the path (42) of the gaming ball (2) and brought back to the acquisition area of the image recording unit (3) and repositioned, and steps b) to d) are repeated, and
e) based on at least one image (300) recorded with the image recording unit (3), a method of identifying is conducted and an identification result is determined that corresponds to, or is unambiguously associated with, the symbol on the surface of the selected gaming ball (2).

2. The method in accordance with Claim 1, **characterized in that**, for fixing the center of mass of the depiction of the selected gaming ball (2) in the image (300) of the image recording unit (3), the gaming ball (2) is stopped and remains motionless with respect to the image recording unit (3).

3. The method in accordance with Claim 1 or 2, **characterized in that** the gaming ball (2) is moved from the starting position (41) along a predefined path (42) through the acquisition area of the image recording unit (3) by a ball guiding unit (4), wherein the respective selected gaming ball (2) is removed from the ball guiding unit (4) after moving on its predefined path (42) and optionally forwarded.

4. The method in accordance with Claim 3, **characterized in that** the selected gaming ball (2) is moved forward on the predefined path (42) in the form of a circular arc on a horizontal plane, wherein the recording direction or line of sight of the image recording unit (3) is essentially horizontal and preferably directed to a spot on the predefined path (42) in which the gaming ball (2) is closest to the image recording unit (3).

5. The method in accordance with any one of Claims 3 or 4, **characterized in that** the gaming ball (2) is received by a circular recess (44) of the ball guiding unit (4), which is essentially designed to be flat and discoid, and is secured against rolling away laterally, wherein
a) the gaming ball (2) is tossed into and/or falls onto the circular recess (44) from above and wherein the fall of the gaming ball (2) is decelerated, in particular by an elastic damping unit (47) disposed below the recess (44), and/or
b) the gaming ball (2) is guided and/or rotated in the recess (44) of the ball guiding unit (4) and supported on a base plate (45) located beneath the discoid ball guiding unit (4), and/or
c) the gaming ball (2) falls through a recess (46) located in the base plate (45) and/or located beneath the ball guiding unit and is transported further.

6. The method in accordance with any one of the preceding claims, **characterized in that** the image recording unit (3) permanently produces images (300) in predefined time intervals and that these images (300) are preferably shown on a monitor so to be visible for the players.

7. The method in accordance with any one of the preceding claims, **characterized in that**, during the predefined period, a number of, in particular four, images (300) is produced and identification of the gaming ball (2) takes place based on at least two of images (300) recorded at different time points, wherein identification is done separately for each of the images (300) and wherein each identification of an image (300) delivers a separate identification result.

8. The method in accordance with any one of the preceding claims, **characterized in that** an identification result is determined based on a recorded image (300), wherein symbols of writing are used as symbols and wherein symbols (21) of writing arranged in circles (22) are arranged on the gaming balls (2), and wherein a marking line (23) representing the direction of writing is provided, which is, in particular, arranged below in writing direction and equally represents an underline under the respective symbol (21) of writing, wherein the marking line (23) is, in particular, connected to the circle (22), in particular via an auxiliary line (24), by
a) finding areas of the image of the gaming ball (2) and saving them as recognition areas, which are limited by an, in particular solid, circular line,
b) for all areas limited by circular edges that were found, determining the orientation of the symbol located within the area, rotating the found image areas according to their orientation so that the determined symbols are each uniformly orientated, and
c) first filtering the symbols of writing located in the oriented and/or rotated areas and then subjecting them to a symbol recognition procedure and, for each of the oriented areas, determining an identification result representing the respective symbol.

9. The method in accordance with Claim 8, **characterized in that** for all areas limited by circular edges that were found, the orientation of the symbol located within the area is determined by finding the image of a marking line abutting, or connected to, the circular line and determining its orientation.

10. The method in accordance with Claim 8 or 9, **characterized in that** the image areas are scaled to a predefined dimension after being oriented.

11. The method in accordance with Claim 8, 9 or 10, **characterized in that**, in the case of differing identification results for multiple areas, that identification result is considered to be determined which has been recognized for the majority of areas.

12. A device for identifying a selected gaming ball (2) from a predefined number of gaming balls (2), each of the gaming balls (2) being provided with a symbol, which is different from the symbols of the other gaming balls (2),
a) comprising an image recording unit (3), which has an acquisition area,
b) comprising means (74, 75) of moving the selected gaming ball (2) from a starting position through the acquisition area of the image recording unit (3),
c) comprising an examining unit for examining the position and size of the image of the gaming ball (2) as well as for producing a positioning signal in case parts of the image of the gaming ball (2) are located outside a lateral edge predefined with respect to the image, and,
d) a positioning unit downstream of the examining unit, which causes the means (74, 75) for moving the selected gaming ball (2) to a new position and/or to reposition the gaming ball (2) in its entrance if a positioning signal is present, wherein the device is configured to shift the gaming ball (2) based on the calculated position along or against the progressing direction of the path (42) of the gaming ball (2), and
e) an identifying unit for identifying symbols (21) located on the gaming balls (2) based on at least one image (300) recorded by means of the image recording unit (3), at the output of which there is an identification result that corresponds to, or is unambiguously associated with, the symbol (21) on the surface of the selected gaming ball (2).

13. The device in accordance with Claim 12, **characterized by** a control unit, which, in order to fix the center of mass (M) of the image (35) of the selected gaming ball (2) in the image of the image recording unit (3), stops or inactivates the means (75, 40, 44, 45) for moving the gaming ball (2) so that the gaming ball (2) remains motionless with respect to the image recording unit (3).

14. The device in accordance with Claim 12 or 13, **characterized in that** a ball guiding unit (4) is provided, by which the gaming ball (2) can be moved from the starting position (422) along a predefined path (42) through the acquisition area of the image recording unit (3), wherein the respective selected gaming ball (2) falls out of the ball guiding unit (4) after being moved via the predefined path (42).

15. The device in accordance with Claim 14, **characterized in that** the ball guiding unit (4) is designed to be a flat, in particular transparent, thin disc, in particular a circular disc, which has at least one eccentrically arranged, in particular circular, recess (44) for receiving the gaming ball (2), wherein the disc of the ball guiding unit (4) is arranged horizontally and rotatably and/or pivotably supported around a center of gravity, in particular the center point of the circular disc, and wherein the recording direction or line of sight of the image recording unit (3) is essentially horizontal and preferably directed to a spot (421) on the predefined path (42) in which the gaming ball (2) is closest to the image recording unit (3).

16. The device in accordance with Claim 15, **characterized in that**
a) an inlet (73) is provided, which is located immediately above a spot on the predefined path (42), wherein an elastic damping unit (47) for decelerating a gaming ball (2) is provided in particular immediately beneath the inlet (73), and/or
b) a base plate (45) for supporting and guiding the gaming balls (2) is provided beneath the discoid ball guiding unit (4), and/or
c) a recess (46) having the size of a gaming ball (2) is provided at the end of the path (42), in particular in the base plate (45), so that a gaming ball (2) can fall through said recess (46).

17. The device in accordance with Claim 15 or 16, **characterized in that** the recess (44) of the ball guiding unit (4) is continued until the edge of the ball guiding unit (4) and that a hemisphere of the gaming ball (2) is depicted in its entirety by the image recording unit (3) and in particular not obscured by the ball guiding unit (4) in at least on position on the path (42).

18. The device in accordance with any one of Claims 12 to 17, **characterized by** a monitor which shows images (300) permanently recorded by the image recording unit (3) in predefined time intervals.

## Revendications

1. Procédé pour identifier une bille (2) de jeu sélectionnée parmi un nombre prédéfini de billes (2) de jeu, chaque bille (2) de jeu comportant respectivement un symbole se distinguant des autres billes (2) de jeu,
a) la bille (2) de jeu sélectionnée étant déplacée à partir d'une position (422) de départ à travers la région de captation d'une unité (3) de prise d'image,
b) le centre (M) de masse de la représentation de la bille (2) de jeu sélectionnée dans l'image (300) de l'unité (3) de prise d'image étant maintenu sans changement pour une durée définie et aucun mouvement relatif par rapport à l'image (300) étant effectué,
c) la position de l'image et la dimension de la représentation de la bille (2) de jeu étant déterminées et la question étant examinée si des parties des représentations de la bille (2) de jeu se trouvent au-delà d'un bord latéral prédéfini par rapport à l'image (300), et
d) si des parties des représentations de la bille (2) de jeu se trouvent au-delà dudit bord latéral, la bille (2) de jeu étant décalée en fonction de la position calculée le long de ou contre la direction de mouvement du trajet (42) de la bille (2) de jeu et ramenée et repositionnée dans la région de captation de l'unité (3) de prise d'image, et les pas b) à d) étant répétés, et
e) un procédé d'identification étant effectué et un résultat d'identification étant établi à partir d'au moins une image (300) captée par l'unité (3) de prise d'image, le résultat d'identification correspondant au symbole sur la surface de la bille (2) sélectionnée ou étant associée nettement.

2. Procédé selon la revendication 1, **caractérisé en ce que** afin d'établir le centre de masse de la représentation de la bille (2) de jeu sélectionnée dans l'image (300) de l'unité (3) de prise d'image, la bille (2) de jeu est arrêtée et maintenue immobile par rapport à l'unité (3) de prise d'image.

3. Procédé selon la revendication 1 ou 2, **caractérisé en ce que** la bille (2) de jeu est déplacée par une unité (4) de guidage de bille à partir d'une position (41) de départ le long d'un trajet (42) prédéfini à travers la région de captation d'une unité (3) de prise d'image, la bille (2) de jeu sélectionnée respective étant éliminée de l'unité (4) de guidage de bille après son mouvement le long du trajet (42) prédéfinie et éventuellement transférée.

4. Procédé selon la revendication 3, **caractérisé en ce que** la bille (2) de jeu sélectionnée est déplacée de façon circulaire sur le trajet (42) prédéfini sur une plaine horizontale, la direction de captation ou le rayon optique de l'unité (3) de prise d'image étant essentiellement horizontale et orienté sur le point sur le trajet (42) où la bille (2) de jeu est le plus près de l'unité (3) de prise d'image.

5. Procédé selon une des revendications 3 ou 4, **caractérisé en ce que** la bille (2) de jeu est accueillie par un évidement (44) circulaire de l'unité (4) de guidage de bille comportant essentiellement une forme plate et discoïde et bloquée à l'égard d'un roulement latéral,
a) la bille (2) de jeu étant lancée par en haut ou tombant dans et/ou sur l'évidement (44) circulaire et la chute de la bille (2) de jeu étant de préférence amortie, en particulier par une unité (47) amortissante disposée au-dessous de l'évidement (44), et/ou
b) la bille (2) de jeu étant guidée et/ou tournée dans l'évidement (44) de l'unité (4) de guidage de bille et appuyée sur un plateau (45) de base disposé au-dessous de l'unité (4) de guidage discoïde, et/ou
c) la bille (2) de jeu tombant à travers un évidement (46) disposé dans le plateau (45) de base dans ou au-dessous de l'unité de guidage de bille à la fin du trajet (42) et transportée ailleurs.

6. Procédé selon une des revendications précédentes, **caractérisé en ce que** l'unité (3) de prise d'image prend des images (300) continuellement et dans des intervalles prédéfinis et **en ce que** ces images (300) sont affichés pour les joueurs de préférence sur un écran.

7. Procédé selon une des revendications précédentes, **caractérisé en ce que** dans cet intervalle prédéfini un nombre d'images (300), en particulier quatre, est pris et **en ce que** l'identification des billes (2) de jeu est basée sur au moins deux images (300) captées dans des moments différents, l'identification de chaque image (300) étant effectuée séparément et chaque identification d'une image (300) fournissant un résultat d'identification à part,
l'identification étant considérée comme correcte uniquement si un nombre prédéfini des résultats d'identification, en particulier au moins la moitié, de préférence tous, sont identiques.

8. Procédé selon une des revendications précédentes, **caractérisé en ce que** un résultat d'identification est établi en fonction d'une image (300) captée, des symboles graphiques étant utilisés comme symboles et des symboles (21) graphiques étant respectivement disposés en cercle sur les billes (2) de jeu, une ligne (23) de marquage représentant la direction d'écriture prévue, disposée en particulier en dessous dans la direction d'écriture et représentant en même temps un soulignement du symbole (21) graphique respectif, la ligne (23) de marquage étant reliée en particulier avec le cercle (22), en particulier par une ligne (24) auxiliaire,
a) des régions de la représentation de la bille (2) de jeu, limitées par une ligne circulaire, notamment continue, étant repérées et mémorisés comme régions de reconnaissance,
b) pour toutes les régions bordées circulairement repérées étant déterminée l'orientation du symbole dans la région,
les régions d'image repérées étant tournées par rapport à leur orientation afin que les symboles détectés présentent la même orientation, et
c) les symboles graphiques disposés dans les régions orientées et/ou tournées étant d'abord filtrés et ensuite soumis à un procédé de reconnaissance de symbole et pour chaque région orientée étant établi un résultat d'identification représentant le symbole respectif.

9. Procédé selon la revendication 8, **caractérisé en ce que** pour chaque région bordée circulairement repérée l'orientation du symbole dans la région est déterminée en repérant la représentation d'une ligne de marquage adjacent à la ligne circulaire ou reliée avec celle-ci et en déterminant son orientation.

10. Procédé selon la revendication 8 ou 9, **caractérisé en ce que** les régions d'image sont ajustées à une dimension prédéfinie après avoir été orientées.

11. Procédé selon la revendication 8, 9, ou 10, **caractérisé en ce que** dans le cas de résultats d'identification différents pour plusieurs régions, le résultat d'identification considéré comme établi est celui reconnu dans la plupart des régions.

12. Dispositif d'identification d'une bille (2) de jeu sélectionnée parmi un nombre prédéfini de billes (2) de jeu, chaque bille (2) de jeu comportant respectivement un symbole se distinguant des symboles des autres billes (2) de jeu,
a) avec une unité (3) de prise d'image comportant une région de captation,
b) avec des moyens (74, 75) pour le mouvement de la bille (2) de jeu sélectionnée à partir d'une position de départ à travers la région de captation de l'unité (3) de prise d'image,
c) avec une unité de vérification pour vérifier la position et la dimension de la représentation de la bille (2) de jeu ainsi que pour émettre un signal de positionnement dans le cas où des parties de la représentation de la bille (2) de jeu se trouve au-delà d'un bord latéral prédéfini par rapport à l'image,
d) avec une unité de positionnement disposée en aval de l'unité de vérification, provocant les moyens (74, 75) à déplacer la bille (2) de jeu sélectionnée dans une nouvelle position et/ou au repositionnement de la bille (2) de jeu dans le cas de la présence d'un signal de positionnement à son entrée, le dispositif étant formé pour décaler la bille (2) de jeu en fonction de la position calculée le long de ou contre la direction de mouvement du trajet (42) de la bille (2) de jeu, ainsi que
e) avec une unité d'identification pour identifier les symboles (21) sur les billes (2) de jeu à partir d'au moins une image (300) captée par l'unité (3) de prise d'image, à la sortie de la dite unité d'identification étant disponible un résultat d'identification correspondant à un symbole (21) sur la surface de la bille (2) sélectionnée ou étant associée nettement.

13. Dispositif selon la revendication 12, **caractérisée par** une unité de contrôle bloquant ou désactivant les moyens (75, 40, 44, 45) pour le mouvement de la bille (2) de jeu pour établir le centre (M) de masse de la représentation (35) de la bille (2) de jeu sélectionnée dans l'image de l'unité (3) de captation d'image, afin que la bille (2) de jeu reste immobile relativement à l'unité (3) de captation de l'image.

14. Dispositif selon la revendication 12 ou 13, **caractérisé en ce que** une unité (4) de guidage de bille est prévue, avec laquelle la bille (2) de jeu peut être déplacée à partir d'une position (422) de départ le long d'un trajet (42) prédéfini à travers la région de captation d'une unité (3) de prise d'image, la bille (2) de jeu sélectionnée respective tombant de l'unité (4) de guidage de bille après son mouvement le long tu trajet (43) prédéfini.

15. Dispositif selon la revendication 14, **caractérisé en ce que** l'unité (4) de guidage de bille est formée comme plateau plat, en particulier transparent et fin, en particulier comme disque circulaire, présentant au moins un évidement (44) en particulier circulaire, disposé excentriquement, pour accueillir la bille (2) de jeu, le plateau de l'unité (4) de guidage de bille étant disposé horizontalement et tournable et/ou pivotable autour d'un centre de gravité, notamment le centre du disque circulaire, la direction d'accueil ou le rayon optique étant essentiellement horizontale et de préférence orienté sur le point (421) sur le trajet (42) prédéfini où la bille (2) de jeu est le plus près de l'unité (3) de prise d'image.

16. Dispositif selon la revendication 15, **caractérisé en ce que**
a) une entrée (73) immédiatement au-dessus d'un point sur le trajet (42) prédéfini est prévue, en particulier immédiatement au-dessous de l'entrée (73) étant prévue une unité (47) amortissante élastique pour amortir une bille (2) de jeu, et/ou **en ce que**
b) un plateau (45) de base est disposé au-dessous de l'unité (4) de guidage discoïde pour supporter et guider les billes (2) de jeu, et/ou **en ce que**
c) au bout du trajet (42), en particulier dans le plateau (45) de base, un évidement (46) de la dimension d'une bille (2) de jeu est prévu, afin qu'une bille (2) de jeu puisse tomber à travers l'évidement (46).

17. Dispositif selon la revendication 15 ou 16, **caractérisé en ce que** l'évidement (44) de l'unité (4) de guidage de bille continu jusqu'au bord de l'unité (4) de guidage de bille et un hémisphère de la bille (2) de jeu est entièrement visualisé par l'unité (3) de prise d'image dans au moins une position du trajet (42) et en particulier pas couvert par l'unité (4) de guidage de bille.

18. Dispositif selon une des revendications 12 à 17, **caractérisé par** un écran affichant des images (300) captées constamment dans des intervalles prédéfinis par l'unité (3) de prise d'image.
